(19) Europäisches Patentamt
European Patent Office
Office européen des brevets

(11) **EP 2 428 900 A1**

(12) **EUROPEAN PATENT APPLICATION**

(43) Date of publication:
**14.03.2012 Bulletin 2012/11**

(51) Int Cl.:
***G06F 17/30*** *(2006.01)*

(21) Application number: **10174836.6**

(22) Date of filing: **01.09.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS**<br><br>(71) Applicants:<br> • **Deutsche Telekom AG**<br>   **53113 Bonn (DE)**<br> • **Technische Universität Berlin**<br>   **10623 Berlin (DE)** | (72) Inventor: **Sundaram, Shiva**<br>**10119 Berlin (DE)**<br><br>(74) Representative: **Vossius & Partner**<br>**Siebertstrasse 4**<br>**81675 München (DE)**<br><br>Remarks:<br>Amended claims in accordance with Rule 137(2) EPC. |

(54) **Ranked latent indexing of multimedia documents**

(57)   The invention provides a ranked Latent Indexing method for indexing multimedia documents by representing the multimedia documents as vectors in a latent space. With the method of the invention, the similarity between multimedia documents may be determine using the distance between the corresponding vectors in the latent space.

EP 2 428 900 A1

**Description**

The invention relates to the field of document retrieval and internet technology, in particular, extracting signal-based information from multimedia documents for indexing, categorization, clustering and retrieval.

Recent advances in Internet and storage technologies have enabled online, instantaneous creation and access of huge amounts of multimedia documents. Multimedia documents include text (web pages, blogs, news articles etc.), images (digital photographs, digital copies of artworks etc.), video clips (television programming, user generated content) and audio clips (music and user-generated content). To provide efficient access to the end-user, it is generally desirable that a data delivery framework indexes the documents. Indexing generally involves extracting key information that helps organize the raw content according to a preset paradigm. The invention described here presents an approach to index multimedia documents using a set of signal feature vectors extracted from them.

A popular approach to index text documents is Latent Semantic Analysis, as described in S. Deerwester et al., "Indexing by Latent Semantic Analysis", JASIS 41(6), 1990, pages 391-407. It exploits the information contained in frequency of occurrence between terms (words or selected keywords) and documents (text material made up of words). The frequency of occurrence between a fixed number of terms and a fixed number documents results in a (generally) large matrix of frequency counts. A mathematical operation known as Singular-Value Decomposition (SVD) of this matrix is subsequently used to represent the documents as vectors in a latent space that explains the semantic structure amongst the collection of the documents. Given a new query document outside the initial collection and the list of keywords and the factor matrices as a result of SVD, similar documents to the given query document can be retrieved using a vector-vector similarity measure (such as Euclidean distance or dot-product or probability-based densities).

An extension of Latent Semantic Analysis of text documents to multimedia documents is Latent Perceptual Indexing (LPI), described in S. Sundaram and S. Narayanan, "Audio Retrieval by Latent Perceptual Indexing" in: Proceedings of The IEEE International Conference on Acoustics, Speech, and Signal Processing, ICASSP 2008, March 30 - April 14, 2008, Las Vegas, USA. This approach describes an example-based retrieval procedure to retrieve audio clips that are similar to the initial example-clip (the query-clip) presented by a user. In this approach, the first step is to extract signal feature vectors (such as Mel-frequency Cepstral Coefficients for speech/audio signals) from a collection of multimedia documents. To create *units* (equivalent to terms in text), the signal feature vectors extracted from a collection of multimedia (audio) clips are clustered using an algorithm known as k-means algorithm at the end of which "K" clusters or units are returned. Then, by vector quantization, unit-document frequency counts are then estimated using the signal features extracted from each audio clip. The frequency counts in this refers to the number of signal feature vectors from an audio clip that are quantized to each of the of the "N" units. For a collection of "M" audio clips and "N" units, frequency-counts results in a unit-document matrix of size "M x N". Subsequently, the documents can again be represented in a latent space after Single-Value Decomposition (SVD). Similar to Latent Semantic Analysis, a set similar documents or audio clips can be retrieved for a given query multimedia document using the vector-based similarity metric.

The LPI approach may also be applied to image and video documents, by changing the medium specific signal feature vectors. However, there is still a need for an improved approach for indexing multimedia documents. In particular, it is an object of the present invention to provide an improved method for extracting content-information and apply it for retrieval by example-based similarities between multimedia documents.

These and other objects are achieved with the features of the claims.

The present invention is an improvement to the Latent Indexing approach for multimedia documents. Instead of calculating only the unit-document frequency of occurrence between signal feature vectors from a document and the nearest of the "N" units, the invention here calculates the unit-document frequency of occurrence between the signal feature vectors from a document and the "K" nearest units. Here, 1 < K <= N. Therefore, for a collection of "M" multimedia documents, "N" units from clustering, and "K" (preset), the frequency counts will result in matrix of size M x (N*K). where * is simple mathematical multiplication.

Specifically, the method of the present invention is for indexing a plurality of multimedia documents. A feature vector is extracted from each one of the plurality of multimedia documents, the dimension of the feature vector usually is about 10 to 100. Using, for example, an unsupervised clustering procedure, such as a k-means algorithm or a vector quantisation approach, a set of clusters of the multimedia documents is formed using the feature vectors, each cluster corresponding to a unit being represented by a codebook entry or a prototypical vector. The unit-document co-occurrence frequency between the feature vectors of each one of the plurality of multimedia documents and the K nearest clusters of the respective multimedia document is calculated using a distance metric, K being a preset number being at least equal to 2 up to the number of clusters formed. This results in a matrix of size M x (K*N), wherein M is the number of multimedia documents and N is the number of clusters. Preferably, K is within 10% of N. A singular-value decomposition operation of this matrix is performed, thereby defining a representation of each one of the plurality of multimedia documents as a vector in a latent space. According to an embodiment, the number of singular values and/or dimensions of the matrices formed after the singular-value decomposition operation is less than N, so the latent space representation is dimensionally reduced in comparison to the original unit-document frequency representation.

In order to identify and rank documents among the plurality of multimedia documents that have a content similar to the content of a (further) query document, the above steps may be repeated with the query document using the clusters formed using the plurality of multimedia documents. This results in a unit-document representation of the query document in the latent space. Using the matrices obtained after SVD using the plurality of multimedia documents, a reduced dimensional vector representation for the query document can also be derived. Using this vector representation, multimedia documents among the plurality of multimedia documents that are similar to the query documents may be determined by using a closeness measure of the vector in the latent space representing the query document and the vectors in the latent space representing each one of the plurality of multimedia documents.

A user-query to a system could for instance be an audio clip for which the system is expected to retrieve similar clips. Along the same lines, for images, the query could be a real image file and the user is querying the system for images or pictures similar to the given example. In general, it is difficult to qualify "similarities" in such cases. According to the present invention, it is assumed that the vector-similarities between multimedia documents can be realized by vector-based dot product, and this is taken to be close to human or user-level expectations of similarities. However, the implicit representation or the key-information extracted to index the multimedia document also plays an important role in retrieving similar documents to a presented query. One of the basic ideas of the present invention is to derive a better representation (and therefore improve similarity measures) by modifying the information-extraction procedure in known latent indexing of multimedia documents. The unit-document frequency count that represent content information in latent indexing is derived by simple quantization. Quantization is a general approach for "binning" a given observation into one of a previously known set of observations. As a result, latent indexing is a generalized method of representing content information directly in terms of known "units".

The present invention goes beyond simple "binning" or quantization of a given set of observations in a multimedia document. In addition to unit-document frequency counts obtained from the nearest "unit", the second nearest, the third nearest and subsequent "K" nearest units are also considered for unit-document frequency counts and to derive a representation of the content information. While this increases the complexity of the computations, this results in a better representation and improved accuracy in example-based document retrieval.

In the following, the present invention will be described in more detail with reference to the sole Figure which illustrates the ranked Latent Indexing approach.

A collection of multimedia documents, e.g. text or image files, audio or video clips that are to be indexed are indicated with reference numeral 1 in the Figure. The documents will typically reside in a database server that is accessible from the Internet. A user can also query the database.

From the multimedia documents 1, a set of signal feature vectors 2 is extracted. For audio clips, this is typically a combination of spectral, temporal and spatical features. Usually the dimension of the feature space is in the order of 10s to 100. Examples of such features include mel-frequency cepstral coefficients, spectral centroid etc (for audio), linguistic features such as bi-gram or n-gram probability vectors (for text) and color or histogram-based features for images or video clips.

An unsupervised clustering procedure indicated with reference numeral 3 is performed, such as the "k-means" algorithm. Alternatively a vector quantization approach such as the Lindo-Buso-Gray (LBG) algorithm or model-based approach such as expectation-maximization (EM) algorithm for fitting a mixture Gaussian model can also be used. The input to these algorithms is the set of all the signal feature vectors extracted from the multimedia documents. This input signal feature vectors can either be provided together or in parts that are each separated categorically or temporally. The output of clustering or vector quantization procedure is a set 4 of "codebook" entries or prototypical vectors or model parameters that are representative of the clustering formed. These are referred to as "units" according to the invention. The set 4 of codebook entries or units or centroids or the model parameters that are a result of the clustering procedure. The "N" entries in this block are labeled as "$C_1$", "$C_2$", "$C_3$",... "$C_N$".

The right-angle line 5 represents the mathematical operation of calculating the unit-document co-occurrence frequency between the "N" clusters and the "M" audio clips. The label for the $i^{th}$ feature vector of the "M" multimedia documents is determined by a distance metric. Simple use of Euclidean distances will lead to quantization. Subsequently when the unit-document co-occurrence frequency calculation is applied to a whole collection of "M" multimedia documents it results in a MxN matrix 6. In an algorithmic illustration, this calculation comprises a first step, wherein the collection of all feature vectors obtained from all documents in the database is clustered, using, for example, the k-means algorithm. This results in N reference clusters. In a second step, for all multimedia documents, $f_{i,j} = \Sigma^{i-T}i_{t=1}\ I(lab(t)=j)$ is calculated, with $i$ = 1 to M, $j$ = 1 to N and $T_i$ being the feature vector of the $i^{th}$ document. $I(\cdot)$ is an indicator function, wherein $I(lab(t)=j)$ = 1 if the $t^{th}$ feature vector is labeled to be in the $j^{th}$ cluster, otherwise $I(\cdot)$ = 0. The $(i,j)^{th}$ element of the sparse matrix $F_{MxN}$ is assigned $F(i,j)=f_{i,j}$.

In this way, the unit-document matrix "F", indicated using reference numeral 6, is obtained.

When in the above algorithm the labeling is derived from the $2^{nd}$ nearest neighbor instead of the first; i.e. K=2 instead of K=1, then yet another matrix 7 can be obtained. This is one of the main differences to the known LPI approach, as in the original LPI, the labels are derived only from the nearest centroid "C". However in the ranked LPI approach according to the present invention, the labels up to K=$k^{th}$ nearest neighbors are considered leading to a M x (K*N) matrix. To clarify, for simple latent indexing, K=1, while for ranked Latent Indexing, K>1 where K<=N, N being the number of centroids derived from the k-means algorithm. Similar to matrix 7, when the labeling is derived from K=$k^{th}$ nearest neighbor, matrix 8 is obtained. It should be noted that the number of blocks obtained can be varied by changing "K". When all of these matrices are augmented column wise, the resulting matrix 9 of size M x (K*N) is obtained. The exact value of "K" may be purely data driven, i.e, it empirically depends on the number of documents, the variety of the documents and the medium (text, audio, speech, video, images etc).

Arrow 10 is intended to represent a singular-value decomposition (SVD) step of the M x (K*N) matrix 9. This results in three SVD matrices "[U]", "[S]" and "[V]", denoted with numerals 11, 12, and 13. By adjusting the number of singular values (and dimensions) retained in these matrices, the final reduced dimensional matrix of size "MxR" can be obtained, here the value of R can be 1<=R<=(K*N) and is set empirically depending on the collection of the documents. Other matrix methods such as principal component analysis (PCA), non-negative matrix factorization, or locality preserving projections is also applicable.

By only retaining the first "R" columns of "U" and retaining only the first "R" rows and "R" columns of "S" and by performing the matrix multiplication "U*S", the matrix 14 can be obtained, which is of dimensions "MxR". This is the representation of the "M" multimedia documents in the latent space of dimensions "R". The value of "R" can be tuned for a particular application such as audio retrieval task as described in the publication of S. Sundaram and S. Narayanan, referred to above.

A query multimedia document 16 may or may not belong to the original collection of "M" multimedia documents 1. As illustrated, the same signal feature vectors are extracted from the query document as in block 2. A row-vector of unit-document frequency is again obtained for this query clip by applying procedure 5 using the clusters 4. Again, similar to the matrices 7 to 9, a row-vector of 1 x (K*N) dimensions can be obtained by the labeling procedure described previously.

As indicated with reference numeral 16, the "K*N" dimensional unit-document frequency row-vector obtained for the query document is then mapped to a "R" dimensional vector using the SVD matrices 11,12, and 13. The mapping is performed by using the formula:

$$\widetilde{x} = \widetilde{u}_x \times \widetilde{S} = x \times \widetilde{V},$$

as described in the publication of S. Sundaram and S. Narayanan. Here $\widetilde{x}$ is the representation of the query document in the "R" dimensional latent space. It is derived by multiplying x, the "K*N" dimensional row-vector with $\widetilde{V}$ which is obtained by retaining the "R" columns of the "V" matrix after the SVD step.

Similarity of the query document with the multimedia documents is determines using a similarity measure 17 between the query document and the collection of multimedia documents in the "R" dimensional latent space. The similarity is a closeness measure between two vectors.

One way of calculating the similarity is by using the vector dot-product:

$$Similarity(\widetilde{f}_k, \widetilde{f}_i) = \cos^{-1}\left( \frac{(\widetilde{u}_k \times \widetilde{S}) \cdot (\widetilde{u}_i \times \widetilde{S})}{\left\| \widetilde{u}_k \times \widetilde{S} \right\| \cdot \left\| \widetilde{u}_i \times \widetilde{S} \right\|} \right)$$

where $\widetilde{f}_k$ and $\widetilde{f}_i$ are the vectors corresponding to the "$i^{th}$" and "$k^{th}$" multimedia documents in the latent space.

Ranked latent indexing can be applied to different signal features (depending on the medium such as audio, video or text) and can be implemented using different variety of clustering methods

While the invention has been illustrated and described in detail in the drawing and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claim the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

**Claims**

1. A method for indexing multimedia documents, comprising the steps of

   (a) providing a plurality of multimedia documents to be indexed;
   (b) extracting a feature vector from each one of the plurality of multimedia documents;
   (c) forming a set of clusters of the multimedia documents using the feature vectors, each cluster being represented by a unit;
   (d) calculating the unit-document co-occurrence frequency between the feature vectors of each one of the plurality of multimedia documents and the cluster nearest to the respective multimedia document, the nearest cluster being determined using a distance metric;
   (e) repeating step (d) for the 2nd to the kth nearest clusters, k being a predefined number between 2 and the number of clusters formed in step (c); and
   (f) performing a singular-value decomposition operation of the matrix formed in steps (d) and (e), thereby defining a representation of each one of the plurality of multimedia documents as a vector in a latent space.

2. The method of claim 1, wherein the multimedia documents include text, image, audio and/or video documents.

3. The method of claim 1 or 2, wherein in step (b) the dimension of the feature vectors is about 10 to 100.

4. The method of any one of the preceding claims, wherein the set of clusters is formed in step (c) using an unsupervised clustering procedure.

5. The method of claim 4, wherein the unsupervised clustering approach is a k-means algorithm.

6. The method of claim 4, wherein the unsupervised clustering approach is a vector quantisation approach.

7. The method of any one of the preceding claims, wherein the distance metric used in steps (d) and (e) is a Euclidian metric.

8. The method of any one of the preceding claims, wherein k in step (e) is less than or equal to 5.

9. The method of any one of the preceding claims, wherein in step (f) the number of singular values and/or dimensions of the matrices formed in the singular-value decomposition operation is reduced, thereby forming a representation of each one of the plurality of multimedia documents as a vector in a dimensionally reduced latent space.

10. The method of any one of the preceding claims, further comprising the step of (g) performing steps (b) to (f) with a query document using the clusters formed using said plurality of multimedia documents, thereby obtaining a vector representation of the query document in the latent space.

11. The method of claim 10, further comprising the step of

    (h) determining multimedia documents among the plurality of multimedia documents that are similar to the query documents by using a closeness measure of the vector in the latent space representing the query document and the vectors in the latent space representing each one of the plurality of multimedia documents.

**Amended claims in accordance with Rule 137(2) EPC.**

**1.** A method for indexing multimedia documents, comprising the steps of

   (a) providing a plurality of multimedia documents (1) to be indexed;
   (b) extracting a feature vector (2) from each one of the plurality of multimedia documents (1);
   (c) forming a set of clusters of the multimedia documents (1) using the feature vectors, each cluster (4) being represented by a unit;
   **characterized by**
   (d) calculating (5) the unit-document co-occurrence frequency between the feature vectors of each one of the plurality of multimedia documents (1) and the cluster (4) nearest to the respective multimedia document, the nearest cluster being determined using a distance metric;

(e) repeating step (d) for the 2nd to the kth nearest clusters, k being a predefined number between 2 and the number of clusters formed in step (c); and

(f) performing a singular-value decomposition operation (10) of the matrix (9) formed in steps (d) and (e), thereby defining a representation of each one of the plurality of multimedia documents as a vector in a latent space.

**2.** The method of claim 1, wherein the multimedia documents (1) include text, image, audio and/or video documents.

**3.** The method of claim 1 or 2, wherein in step (b) the dimension of the feature vectors is about 10 to 100.

**4.** The method of any one of the preceding claims, wherein the set of clusters (4) is formed in step (c) using an unsupervised clustering procedure.

**5.** The method of claim 4, wherein the unsupervised clustering approach is a k-means algorithm.

**6.** The method of claim 4, wherein the unsupervised clustering approach is a vector quantisation approach.

**7.** The method of any one of the preceding claims, wherein the distance metric used in steps (d) and (e) is a Euclidian metric.

**8.** The method of any one of the preceding claims, wherein k in step (e) is less than or equal to 5.

**9.** The method of any one of the preceding claims, wherein in step (f) the number of singular values and/or dimensions of the matrices formed in the singular-value decomposition operation is reduced, thereby forming a representation of each one of the plurality of multimedia documents (1) as a vector in a dimensionally reduced latent space.

**10.** The method of any one of the preceding claims, further comprising the step of

(g) performing steps (b) to (f) with a query document (16) using the clusters formed using said plurality of multimedia documents (1), thereby obtaining a vector representation of the query document (16) in the latent space.

**11.** The method of claim 10, further comprising the step of

(h) determining multimedia documents among the plurality of multimedia documents (1) that are similar to the query documents by using a closeness measure (17) of the vector in the latent space representing the query document (16) and the vectors in the latent space representing each one of the plurality of multimedia documents.

EP 2 428 900 A1

(3)
(5)

| $C_1$ | $C_2$ | $C_3$ | $C_4$ | (4) | $C_1$ | $C_2$ | $C_3$ | $C_4$ | (4) | $C_1$ | $C_2$ | $C_3$ | $C_4$ | (4) |

(10)

| 0.78 | 0 | 0.22 | 0 | | 0.78 | 0 | 0.22 | 0 | | 0.78 | 0 | 0.22 | 0 |
| 0 | 0.08 | 0.05 | 0.8 | | 0 | 0.08 | 0.12 | 0.8 | | 0 | 0.08 | 0.02 | 0.8 |
| 0.43 | 0.57 | 0 | 0 | | 0.43 | 0.57 | 0.33 | 0 | | 0.43 | 0.57 | 0 | 0 |
| 0 | 0.9 | 0.1 | 0 | | 0.6 | 0.9 | 0.1 | 0.21 | | 0 | 0.9 | 0.1 | 0 |
| 0 | 0 | 0.05 | 0.95 | | 0 | 0.54 | 0.05 | 0.95 | | 0 | 0.01 | 0.35 | 0.95 |

(6)　　　　　(7)　　　　　(8)　　　　　(9)

(1)　　(2)

(4)　　　　　(4)　　　　　(4)

(15)

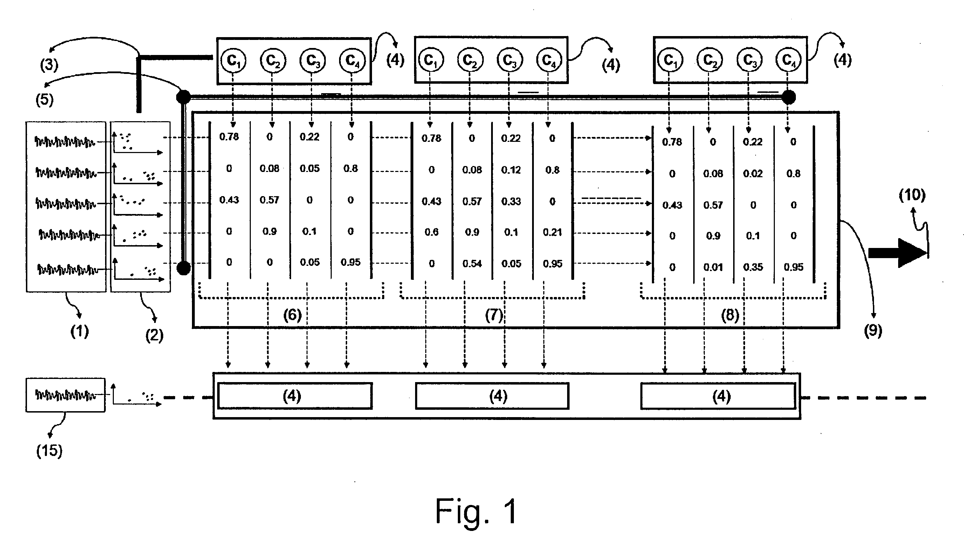

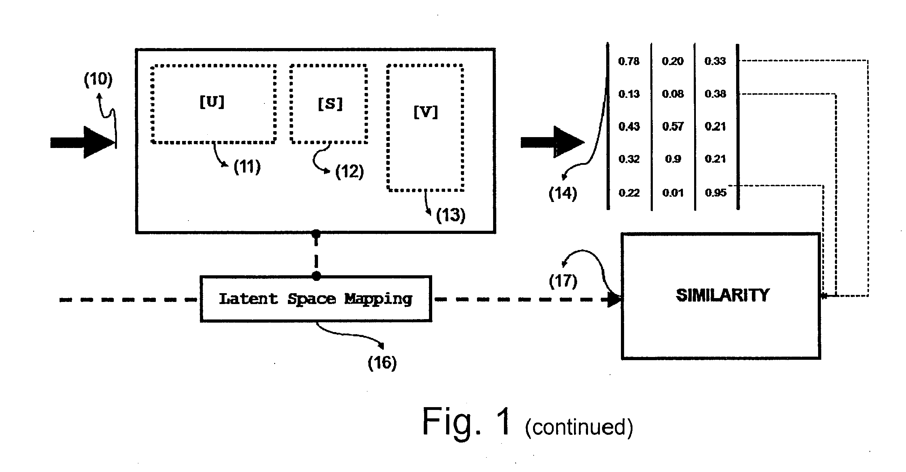

## Fig. 1

| 0.78 | 0.20 | 0.33 |
| 0.13 | 0.08 | 0.38 |
| 0.43 | 0.57 | 0.21 |
| 0.32 | 0.9 | 0.21 |
| 0.22 | 0.01 | 0.95 |

(14)

(17)

SIMILARITY

[U] (11)  [S] (12)  [V] (13)

(10)

Latent Space Mapping (16)

Fig. 1 (continued)

Europäisches
Patentamt

European
Patent Office

Office européen
des brevets

**EUROPEAN SEARCH REPORT**

Application Number

EP 10 17 4836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OZLEM KALINLI ET AL: "Saliency-driven unstructured acoustic scene classification using latent perceptual indexing", MULTIMEDIA SIGNAL PROCESSING, 2009. MMSP '09. IEEE INTERNATIONAL WORKSHOP ON, IEEE, PISCATAWAY, NJ, USA, 5 October 2009 (2009-10-05), pages 1-6, XP031550782, ISBN: 978-1-4244-4463-2 * the whole document * | 1-11 | INV. G06F17/30 |
| | ----- | | |
| A | SUNDARAM S ET AL: "A divide-and-conquer approach to Latent Perceptual Indexing of audio for large Web 2.0 applications", MULTIMEDIA AND EXPO, 2009. ICME 2009. IEEE INTERNATIONAL CONFERENCE ON, IEEE, PISCATAWAY, NJ, USA, 28 June 2009 (2009-06-28), pages 466-469, XP031510791, ISBN: 978-1-4244-4290-4 * the whole document * | 1-11 | |
| | ----- | | TECHNICAL FIELDS SEARCHED (IPC) |
| A,D | SHIVA SUNDARAM ET AL: "Audio retrieval by latent perceptual indexing", ACOUSTICS, SPEECH AND SIGNAL PROCESSING, 2008. ICASSP 2008. IEEE INTERNATIONAL CONFERENCE ON, IEEE, PISCATAWAY, NJ, USA, 31 March 2008 (2008-03-31), pages 49-52, XP031250485, ISBN: 978-1-4244-1483-3 * the whole document * | 1-11 | G06F |
| | ----- | | |
| | -/-- | | |

The present search report has been drawn up for all claims

| Place of search | Date of completion of the search | Examiner |
|---|---|---|
| Munich | 26 January 2011 | Konak, Eyüp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                                                    
& : member of the same patent family, corresponding document

EPO FORM 1503 03.82 (P04C01)

## EUROPEAN SEARCH REPORT

Application Number

EP 10 17 4836

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DEERWESTER S ET AL: "INDEXING BY LATENT SEMANTIC ANALYSIS", JOURNAL OF THE AMERICAN SOCIETY FOR INFORMATION SCIENCE, AMERICAN SOCIETY FOR INFORMATION. WASHINGTON, US, vol. 41, no. 6, 1 September 1990 (1990-09-01), pages 391-407, XP000560615, ISSN: 0002-8231, DOI: DOI:10.1002/(SICI)1097-4571(199009)41:6<391::AID-ASI1>3.0.CO;2-9 * the whole document * ----- | 1-11 | |

TECHNICAL FIELDS
SEARCHED      (IPC)

The present search report has been drawn up for all claims

| Place of search | Date of completion of the search | Examiner |
|---|---|---|
| Munich | 26 January 2011 | Konak, Eyüp |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. DEERWESTER et al.** Indexing by Latent Semantic Analysis. *JASIS,* 1990, vol. 41 (6), 391-407

- **S. SUNDARAM ; S. NARAYANAN.** Audio Retrieval by Latent Perceptual Indexing. *Proceedings of The IEEE International Conference on Acoustics, Speech, and Signal Processing,* 30 March 2008